# EUROPEAN PATENT SPECIFICATION

(11) **EP 4 393 673 B1**
(45) Date of publication and mention of the grant of the patent: **09.12.2026**
(21) Application number: 22860908.7
(22) Date of filing: 18.05.2022
(51) Int. Cl.: B29C 44/36, B29C 44/00, B29C 45/00, B29C 44/34

(54) **FILTER FOR INTRODUCING PHYSICAL FOAMING AGENT, MANUFACTURING DEVICE AND MANUFACTURING METHOD FOR FOAM MOLDED PRODUCT**
FILTER ZUM EINBRINGEN EINES PHYSIKALISCHEN SCHÄUMUNGSMITTELS, HERSTELLUNGSVORRICHTUNG UND HERSTELLUNGSVERFAHREN FÜR EIN SCHAUMFORMPRODUKT
FILTRE POUR INTRODUIRE UN AGENT MOUSSANT PHYSIQUE, DISPOSITIF DE FABRICATION ET MÉTHODE DE FABRICATION POUR PRODUIT MOULÉ EN MOUSSE

(30) Priority: 24.08.2021 JP 2021136093
(43) Date of publication of application: 03.07.2024
(73) Proprietor: Maxell, Ltd., Kyoto 618-8525 (JP)
(72) Inventor: YAMAGUCHI, Yasuo, Otokuni-gun, Kyoto 618-8525 (JP); GOTO, Hideto, Otokuni-gun, Kyoto 618-8525 (JP); YAMAMOTO, Satoshi, Otokuni-gun, Kyoto 618-8525 (JP); YUSA, Atsushi, Otokuni-gun, Kyoto 618-8525 (JP)
(74) Representative: Mewburn Ellis LLP
(86) International application number: PCT/JP2022/020691
(87) International publication number: WO 2023/026611

(56) References cited:
- EP-B1- 1 051 236
- JP-A- 2001 113 574
- JP-A- 2001 198 961
- JP-A- 2001 198 961
- JP-A- 2002 292 693
- JP-A- 2004 050 459
- JP-A- 2004 237 729
- JP-A- 2006 102 959
- JP-A- 2016 500 347
- JP-A- 2016 500 347
- JP-A- 2018 111 251
- JP-A- 2019 198 993
- US-A1- 2019 329 462

## Description

### Technical Field

The present invention relates to a physical foaming agent introduction filter, and an apparatus and a method for producing a foamed molded product.

### Background Art

As a method for foam injection molding using nitrogen or carbon dioxide as a physical foaming agent, there is a method in which a high-pressure fluid to be a supercritical fluid is dissolved by shearing and kneading with molten resin. On the other hand, Patent Literature 1 discloses a method for molding a foamed molded product, using relatively low-pressure nitrogen, carbon dioxide, or the like without requiring a supercritical fluid. According to this method, without using a special high-pressure apparatus, fine foam cells can be formed in a molded product by a simple process with a low-pressure physical foaming agent.

A method for producing a foamed molded product described in Patent Literature 1 is a method for producing a foamed molded product, by using a production apparatus including: a plasticizing cylinder having a plasticization zone in which thermoplastic resin is plasticized and melted to become molten resin, and a starvation zone in which the molten resin is brought into a starved state, the plasticizing cylinder including an introduction port, formed in the plasticizing cylinder, that is configured to introduce a physical foaming agent into the starvation zone; and an introduction speed adjustment container connected to the introduction port. The method includes: plasticizing and melting the thermoplastic resin to form the molten resin, in the plasticization zone; supplying a pressurized fluid including the physical foaming agent at a fixed pressure to the introduction speed adjustment container, and introducing the pressurized fluid at the fixed pressure from the introduction speed adjustment container into the starvation zone, to maintain the starvation zone at the fixed pressure; bringing the molten resin into a starved state, in the starvation zone; bringing, while maintaining the starvation zone at the fixed pressure, the molten resin in the starved state into contact with the pressurized fluid, in the starvation zone; and molding the molten resin brought into contact with the pressurized fluid including the physical foaming agent into a foamed molded product.
EP 1 051 236 A1 discloses expanded porous thermoplastic polymer membranes and a method and device for the production thereof.
JP 2001 198961 A discloses an injection apparatus for gas dissolved resin and an injection molding apparatus.
US 2019/329462 A1 discloses a method and apparatus for manufacturing foamed product.

### Citation List

### Patent Literature

Patent Literature 1: JP 6777553 B2

### Summary of Invention

### Technical Problems

In the conventional method for producing a foamed molded product described above, in the foam molding, there is a case in which a vent-up phenomenon may occur in which molten resin in the starvation zone flows backward into the introduction port for introducing the physical foaming agent, opening to the starvation zone provided in the cylinder. In this case, the molten resin may solidify to remain in the introduction port. If the solidifying resin remains in the introduction port, the physical foaming agent cannot be stably supplied. Thus, it is necessary to remove the remaining resin, which requires time and effort.

In addition, gas in the plasticizing cylinder is degassed at the time of cleaning or the like after the completion of molding of a foamed product, gas (a physical foaming agent) stored in the introduction speed adjustment container is introduced all at once into the plasticizing cylinder. Thus, there is a case in which a loud foaming sound may be generated.

The present invention has been made in view of the above circumstances. It is an object of the present invention to provide a physical foaming agent introduction filter, and an apparatus and a method for producing a foamed molded product, capable of reducing a vent-up phenomenon and stably supplying a physical foaming agent to a starvation zone (a zone in which molten resin in a starved state exists).

It is another object of the present invention to provide an apparatus and a method for producing a foamed molded product, capable of reducing generation of a loud foaming sound at the time of cleaning or the like after completion of molding of a foamed product.

### Solutions to Problems

To solve the above problems, a physical foaming agent introduction filter according to the present invention, used when a physical foaming agent is introduced into molten resin in a starved state, is as specified in claim 1.

Here, the diameter of the resin-contact-side hole is defined as 10 to 80 µm, because it is technically difficult to form the resin-contact-side hole to have a diameter of smaller than 10 µm, and because, when the diameter of the resin-contact-side hole exceeds 80 µm, molten resin enters the resin-contact-side hole to solidify and the resin-contact-side hole is likely to be clogged.

In the present invention, the diameter of the resin-contact-side hole of the physical foaming agent introduction filter is equal to or smaller than the diameter of the physical foaming agent introduction hole, and is 10 to 80 µm. Thus, it is possible to reduce entrance of the molten resin into the resin-contact-side hole. Therefore, the molten resin does not solidify and does not remain in an introduction port in which the physical foaming agent introduction filter is provided. In addition, it is possible to reliably introduce the physical foaming agent into the molten resin in the starved state, from the physical foaming agent introduction hole through the resin-contact-side hole. Therefore, it is possible to reduce a vent-up phenomenon and stably supply the physical foaming agent to the molten resin in the starved state.

Further, in the configuration according to the present invention, the diameter of the physical foaming agent introduction hole may be 20 to 400 µm.

Here, the diameter of the physical foaming agent introduction hole is defined as 20 to 400 µm, because, when the diameter of the physical foaming agent introduction hole is smaller than 20 µm, the flow of a physical foaming agent is lowered to make it difficult to reliably introduce the physical foaming agent into molten resin in a starved state, and because, when the diameter of the physical foaming agent introduction hole exceeds 400 µm, the diameter of the physical foaming agent introduction hole becomes excessively large and the number of physical foaming agent introduction holes is reduced.

According to such a configuration, it is possible to reliably and stably introduce a physical foaming agent into molten resin in a starved state.

Further, in the configuration according to the present invention, the plurality of the fine holes are provided at predetermined intervals longitudinally and laterally, and each of a thickness of a separation wall between the physical foaming agent introduction holes longitudinally adjacent to each other and a thickness of a separation wall between the physical foaming agent introduction holes laterally adjacent to each other are 0.01 to 1.0 mm.

Here, the thicknesses of the separation walls between the physical foaming agent introduction holes longitudinally and laterally adjacent to each other are defined as 0.01 to 1.0 mm, because, when the thicknesses of the separation walls are thinner than 0.01 mm, the thicknesses of the separation walls become excessively thin to cause the strength of the physical foaming agent introduction filter to decrease, and because, when the thicknesses of the separation walls exceed 1.0 mm, the thicknesses of the separation walls become excessively thick and the number of physical foaming agent introduction holes is reduced.

According to such a configuration, it is possible to sufficiently secure the number of physical foaming agent introduction holes while reducing a decrease in strength of the physical foaming agent introduction filter.

An apparatus for producing a foamed molded product according to the present invention includes:
a plasticizing cylinder having a plasticization zone in which thermoplastic resin is plasticized and melted to become molten resin, and a starvation zone in which the molten resin is brought into a starved state, the plasticizing cylinder being provided with an introduction port configured to introduce a physical foaming agent into the starvation zone;
an introduction speed adjustment container connected to the introduction port; and
a physical foaming agent supply mechanism connected to the introduction speed adjustment container, the physical foaming agent supply mechanism being configured to supply a physical foaming agent to the plasticizing cylinder via the introduction speed adjustment container,
wherein the physical foaming agent introduction filter according to claim 1 or 2 is provided in the introduction port,
wherein a pressurized fluid including the physical foaming agent at a fixed pressure is supplied to the introduction speed adjustment container, and the pressurized fluid at the fixed pressure is introduced from the introduction speed adjustment container into the starvation zone, to maintain the starvation zone at the fixed pressure,
wherein while the starvation zone is maintained at the fixed pressure, the molten resin in the starved state is brought into contact with the pressurized fluid including the physical foaming agent at the fixed pressure, in the starvation zone, and
wherein the molten resin brought into contact with the pressurized fluid including the physical foaming agent is molded into a foamed molded product.

In the present invention, the diameter of the resin-contact-side hole of the physical foaming agent introduction filter is equal to or smaller than the diameter of the physical foaming agent introduction hole, and is 10 to 80 µm. Thus, it is possible to reduce entrance of the molten resin into the resin-contact-side hole. Therefore, the molten resin does not solidify and does not remain in the introduction port in which the physical foaming agent introduction filter is provided. In addition, it is possible to reliably introduce the physical foaming agent into the molten resin in the starved state, from the physical foaming agent introduction hole through the resin-contact-side hole. Therefore, it is possible to reduce a vent-up phenomenon and stably supply the physical foaming agent to the molten resin in the starvation zone.

Further, in the configuration according to the present invention, the introduction speed adjustment container may be provided with an introduction port opening and closing mechanism capable of opening and closing the introduction port.

According to such a configuration, when a foamed molded product is molded, the introduction port can be opened by the introduction port opening and closing mechanism, as a result of which a physical foaming agent can be stably introduced into molten resin in the starvation zone. When the plasticizing cylinder is degassed after the completion of the molding of the foamed molded product, the introduction port can be closed by the introduction port opening and closing mechanism, whereby, with the closure, gas (the physical foaming agent) stored in the introduction speed adjustment container is not introduced into the plasticizing cylinder, as a result of which generation of a loud foaming sound can be reduced.

A method for producing a foamed molded product according to the present invention is a method for producing a foamed molded product, by using a production apparatus including:
a plasticizing cylinder having a plasticization zone in which thermoplastic resin is plasticized and melted to become molten resin, and a starvation zone in which the molten resin is brought into a starved state, the plasticizing cylinder being provided with an introduction port configured to introduce a physical foaming agent into the starvation zone;
an introduction speed adjustment container connected to the introduction port; and
the physical foaming agent introduction according to claim 1 or 2, provided in the introduction port, and
the method includes:
   plasticizing and melting the thermoplastic resin to form the molten resin, in the plasticization zone;
   supplying a pressurized fluid including the physical foaming agent at a fixed pressure to the introduction speed adjustment container, and introducing the pressurized fluid at the fixed pressure from the introduction speed adjustment container into the starvation zone, to maintain the starvation zone at the fixed pressure;
   bringing the molten resin into the starved state, in the starvation zone;
   bringing, while maintaining the starvation zone at the fixed pressure, the molten resin in the starved state into contact with the pressurized fluid, in the starvation zone; and
   molding the molten resin brought into contact with the pressurized fluid including the physical foaming agent into a foamed molded product.

In the present invention, the diameter of the resin-contact-side hole of the physical foaming agent introduction filter is equal to or smaller than the diameter of the physical foaming agent introduction hole, and is 10 to 80 µm. Thus, it is possible to reduce entrance of the molten resin into the resin-contact-side hole. Therefore, the molten resin does not solidify and does not remain in the introduction port in which the physical foaming agent introduction filter is provided. In addition, it is possible to reliably introduce the physical foaming agent into the molten resin in the starved state, from the physical foaming agent introduction hole through the resin-contact-side hole. Therefore, it is possible to reduce a vent-up phenomenon and stably supply the physical foaming agent to the molten resin in the starvation zone.

Further, in the configuration according to the present invention, the introduction speed adjustment container may be provided with an introduction port opening and closing mechanism capable of opening and closing the introduction port. The introduction port may be opened by the introduction port opening and closing mechanism, when the molding into the foamed molded product is performed. The introduction port may be closed by the introduction port opening and closing mechanism, when the plasticizing cylinder is degassed after the molding into the foamed molded product has been completed.

According to such a configuration, when a foamed molded product is molded, the introduction port can be opened by the introduction port opening and closing mechanism, as a result of which a physical foaming agent can be stably introduced into molten resin in the starvation zone. When the plasticizing cylinder is degassed after the completion of the molding of the foamed molded product, the introduction port can be closed by the introduction port opening and closing mechanism, whereby, with the closure, gas (the physical foaming agent) stored in the introduction speed adjustment container is not introduced into the plasticizing cylinder, as a result of which generation of a loud foaming sound can be reduced.

### Advantageous Effects of Invention

According to the present invention, it is possible to reduce a vent-up phenomenon and stably supply a physical foaming agent to a starvation zone (a zone in which molten resin in a starved state exists).

In addition, it is possible to reduce generation of a loud foaming sound at the time of cleaning or the like after the completion of molding of a foamed product.

### Brief Description of Drawings

Fig. 1 illustrates a first embodiment of the present invention, and is a cross-sectional view illustrating a schematic configuration of an extrusion production apparatus for a foamed molded product.
Fig. 2 illustrates the same, and is a cross-sectional view illustrating a schematic configuration of an introduction speed adjustment container.
Fig. 3 illustrates the same, and is a flowchart illustrating an extrusion production method for a foamed molded product.
Fig. 4 illustrates the same and illustrates a physical foaming agent introduction filter, and (a) is a plan view, (b) is a bottom view, and (c) is a cross-sectional view taken along line A-A in (a).
Fig. 5 illustrates the same, and is a cross-sectional view of relevant part of the physical foaming agent introduction filter.
Fig. 6 illustrates the same, and is a bottom view regarding a cross-sectional view of relevant part of the physical foaming agent introduction filter.
Fig. 7 illustrates the same and illustrates modifications of fine holes, and (a) is a cross-sectional view for a first modified example and (b) is a cross-sectional view for a second modified example.
Fig. 8 illustrates the same and illustrates another modified example of the physical foaming agent introduction filter, and is a bottom view regarding a cross-sectional view of relevant part.
   It is a schematic configuration view illustrating an extrusion production apparatus for a foamed molded product according to a second embodiment of the present invention.
Figs. 9 illustrates a second embodiment of the present invention, and (a) is a cross-sectional view illustrating a schematic configuration of an introduction speed adjustment container in a state where an introduction port is opened, and (b) is a cross-sectional view illustrating a schematic configuration of the introduction speed adjustment container in a state where the introduction port is closed.

### Description of Embodiments

Hereinafter, embodiments of the present invention will be described with reference to the drawings, and the embodiments contribute to "Goal 9: Industry, Innovation and Infrastructure" of SDGs: Sustainable Development Goals, proposed by the United Nations.

### (First Embodiment)

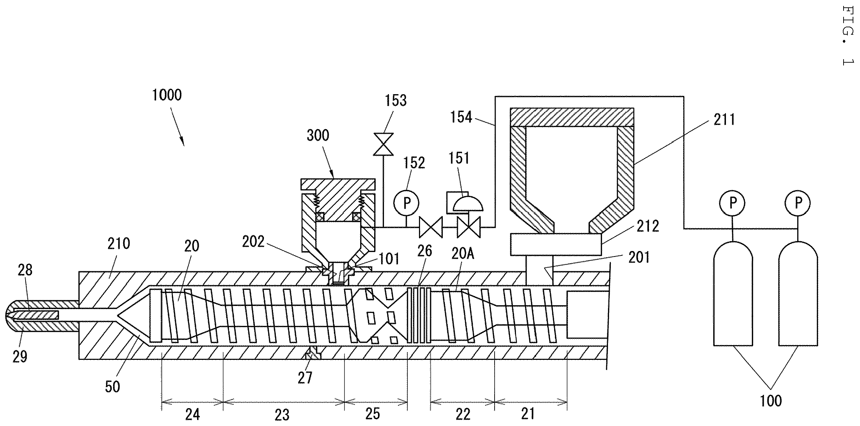

In the first embodiment, a production apparatus 1000 illustrated in Fig. 1 is used to produce a foamed molded product. The production apparatus 1000 mainly includes a plasticizing cylinder 210 inside which a screw 20 is arranged, a bomb 100 that is a physical foaming agent supply mechanism for supplying a physical foaming agent to the plasticizing cylinder 210, a clamping unit (not illustrated) provided with a mold, and a controller (not illustrated) for controlling operation of the plasticizing cylinder 210 and the clamping unit.

Molten resin plasticized and melted inside the plasticizing cylinder 210 flows from the right toward the left in Fig. 1. Thus, inside the plasticizing cylinder 210 of the present embodiment, the right in Fig. 1 is defined as "upstream" or "backward", and the left in Fig. 1 is defined as "downstream" or "forward".

The plasticizing cylinder 210 has a plasticization zone 21 in which thermoplastic resin is plasticized and melted to become molten resin, and a starvation zone 23, provided on the downstream side of the plasticization zone 21, in which the molten resin is brought into a starved state.

The "starved state" is a state in which the starvation zone 23 is not filled with the molten resin to be unfilled. In the starvation zone 23, a space not occupied by the molten resin thus exists. Also in the plasticizing cylinder 210, an introduction port 202 for introducing a physical foaming agent into the starvation zone 23 is formed. An introduction speed adjustment container (pressure adjustment container) 300 is connected to the introduction port 202. The bomb 100 supplies a physical foaming agent into the plasticizing cylinder 210 via the introduction speed adjustment container 300.

The production apparatus 1000 has only one starvation zone 23. However, the production apparatus used in the present embodiment is not limited to this configuration. For example, to enhance permeation of a physical foaming agent into molten resin, a structure may be employed that has a plurality of starvation zones 23 and includes a plurality of introduction ports 202 formed with respect to the plurality of the starvation zones 23, allowing the physical foaming agent to be introduced into the plasticizing cylinder 210 from the plurality of introduction ports 202. In addition, the production apparatus 1000 is an injection molding apparatus. However, the production apparatus used in the present embodiment is not limited to this configuration, and may be, for example, an extrusion molding apparatus.

In the production apparatus 1000, when the screw 20 inside the plasticizing cylinder 210 rotates, resin pellets are plasticized and melted, and then the molten resin is fed forward inside the plasticizing cylinder 210. In addition, the molten resin is fed forward inside the plasticizing cylinder 210 by the rotation of the screw 20.

In the upper side surface of the plasticizing cylinder 210, a resin supply port 201 for supplying thermoplastic resin to the cylinder 210 and the introduction port 202 for introducing a physical foaming agent into the plasticizing cylinder 210 are provided in order from the upstream side.

A hopper 211 for supplying resin and a feed screw 212 are disposed with respect to the resin supply port 201, and the introduction speed adjustment container 300 is connected to the introduction port 202.

The plasticizing cylinder 210 has the plasticization zone 21 provided on the upstream side, and the starvation zone 23 provided on the downstream side. The plasticization zone 21 is a zone in which thermoplastic resin is plasticized and melted to become molten resin.

The starvation zone 23 is a zone in which the molten resin is brought into a starved state. The "starved state" refers to a state in which the starvation zone 23 is not filled with molten resin to be unfilled, or a state in which the density of the molten resin is reduced. In the starvation zone 23, a space not occupied by the molten resin may thus exist.

The plasticizing cylinder 210 has, in order from the upstream side toward the downstream side, the plasticization zone 21, a compression zone 22, a flow speed adjustment zone 25, the starvation zone 23, and a recompression zone 24. As described above, the plasticization zone 21 is a zone in which thermoplastic resin is plasticized and melted to become molten resin. The compression zone 22 is a zone in which the thermoplastic resin is sheared and kneaded to be plasticized and melted, and in which the molten resin is compressed. As described above, the starvation zone 23 is a zone in which the molten resin is brought into the starved state. The recompression zone 24 is a zone in which the molten resin is recompressed. Note that the flow speed adjustment zone 25 will be described later.

As described above, in the plasticizing cylinder 210, the introduction port 202 is provided as an opening for introducing a physical foaming agent into the starvation zone 23. The introduction speed adjustment container 300 is connected to the introduction port 202. The bomb 100 is connected to the introduction speed adjustment container 300 by piping 154 via a pressure reducing valve 151, a pressure gauge 152, and an open valve 153. The bomb 100 is configured to supply a physical foaming agent into the cylinder 210 via the introduction speed adjustment container 300.

At a nozzle tip 29 of the plasticizing cylinder 210, a shut-off valve 28 is provided which opens and closes by driving an air cylinder, and the inside of the plasticizing cylinder 210 can be maintained at a high pressure. The mold (not illustrated) is brought into close contact with the nozzle tip 29, and a cavity formed by the mold is filled with molten resin by injection from the nozzle tip 29.

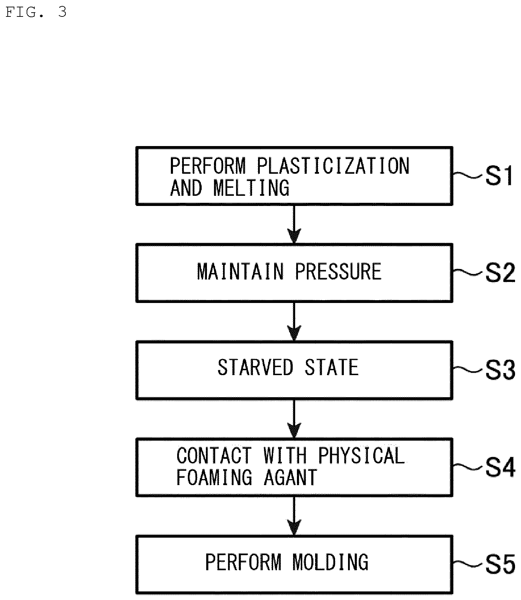

A method for producing a foamed molded product, according to the present embodiment, will be described with reference to the flowchart illustrated in Fig. 3.

### (1) Plasticizing and Melting Thermoplastic Resin

First, thermoplastic resin is plasticized and melted to form molten resin, in the plasticization zone 21 of the plasticizing cylinder 210 (step S1 in Fig. 3). For the thermoplastic resin, various resins can be used in accordance with intended heat resistance and use of a molded product.

Specifically, examples of the usable thermoplastic resins include thermoplastic resins such as polypropylene, polymethyl methacrylate, polyamide, polyethylene, polycarbonate, polybutylene terephthalate, amorphous polyolefin, polyetherimide, polyethylene terephthalate, polyether ether ketone, ABS resin (acrylonitrile-butadienestyrene copolymer resin), polyphenylene sulfide, syndiotactic polystyrene, polyamide imide, polylactic acid, and polycaprolactone, and composite materials thereof. In particular, a crystalline resin is desirably used because it easily forms fine cells. These thermoplastic resins may be used alone, or may be used as a mixture of two or more thereof.

It is also possible to use a mixture obtained by kneading these thermoplastic resins with various inorganic fillers such as glass fiber, talc, carbon fiber, and ceramic, and organic fillers such as cellulose nanofiber, cellulose, and wood flour. The thermoplastic resin is preferably mixed with an inorganic filler that functions as a foam nucleating agent, an organic filler, or an additive that increases melt tension. Mixing these can make foam cells fine. The thermoplastic resin may contain various other general-purpose additives, as necessary.

In the plasticizing cylinder 210 inside which the screw 20 is arranged, the thermoplastic resin is plasticized and melted. On an outer wall surface of the plasticizing cylinder 210, a band heater (not illustrated) is disposed, whereby the plasticizing cylinder 210 is heated. In addition to this heat, shearing heat generated by rotation of the screw 20 is added. As a result, the thermoplastic resin is plasticized and melted.

### (2) Maintaining Pressure in Starvation Zone

Next, a physical foaming agent at a fixed pressure is supplied to the introduction speed adjustment container 300, and then the pressurized fluid at the fixed pressure is introduced from the introduction speed adjustment container 300 into the starvation zone 23, whereby the pressure in the starvation zone 23 is maintained at the fixed pressure (step S2 in Fig. 3).

As the physical foaming agent, a pressurized fluid is used. In the present embodiment, "fluid" means any of liquid, gas, and supercritical fluid. In addition, the physical foaming agent is preferably carbon dioxide, nitrogen, or the like from the viewpoint of cost, and a load on the environment. The pressure of the physical foaming agent used in the present embodiment is set to a relatively low pressure, and thus, for example, a fluid can be used that is extracted from the bomb 100, such as a nitrogen bomb, a carbon dioxide bomb, or an air bomb, in which the fluid is stored, and that is then subjected to reduction in pressure to a fixed pressure through the pressure reducing valve 151. In this case, it is not necessary to provide a pressure increase apparatus, the overall cost of the production apparatus can be reduced. If necessary, a fluid whose pressure is increased to a predetermined pressure may be used as the physical foaming agent. For example, in a case where nitrogen is used as the physical foaming agent, the physical foaming agent can be produced by the following method. First, nitrogen is purified through a nitrogen separation membrane while air in the atmosphere is compressed by a compressor. Next, the purified nitrogen is subjected to an increase in pressure to a predetermined pressure using a booster pump, a syringe pump, or the like to produce a physical foaming agent. Compressed air may also be used as the physical foaming agent. In the present embodiment, the physical foaming agent and the molten resin are not subjected to forcible shearing and kneading. Thus, even when compressed air is used as the physical foaming agent, it is possible to reduce deterioration of the molten resin due to oxidation because oxygen, which has low dissolubility with respect to the molten resin, is hardly dissolved in the molten resin.

The pressure of the physical foaming agent introduced into the starvation zone 23 is fixed, and the pressure in the starvation zone 23 is maintained at a fixed pressure equal to the pressure of the introduced physical foaming agent. The pressure of the physical foaming agent is preferably 0.5 MPa to 30 MPa, more preferably 1 MPa to 25 MPa, and still more preferably 1 MPa to 15 MPa. Although the optimum pressure varies depending on the type of the molten resin, it is possible to cause a physical foaming agent in an amount necessary for foaming to permeate through molten resin when the pressure of the physical foaming agent is set to be equal to or higher than 1 MPa, and it is possible to improve the heat resistance of a foamed molded product when the pressure of the physical foaming agent is set to be equal to or lower than 30 MPa. Production at a pressure of higher than 12 MPa (high pressure) may be prone to generation of unmelted residues in the foaming agent.

Note that the wording the pressure of the physical foaming agent for pressurizing molten resin is "fixed" means that the fluctuation range of a pressure with respect to a predetermined pressure is preferably within ±20%, and more preferably within ±10%. The pressure in the starvation zone 23 is measured, for example, by a pressure sensor 27 provided at a position facing the introduction port 202 of the plasticizing cylinder 210.

Further, the starvation zone 23 moves inside the plasticizing cylinder 210 in a forward-backward direction along with forward and backward movement of the screw 20. However, the pressure sensor 27 illustrated in Fig. 1 is always provided at a position allowing the pressure sensor 27 to exist in the starvation zone 23, within the range form the most forward position to the most backward position of the starvation zone 23. The position facing the introduction port 202 is also always within the starvation zone 23. Thus, the pressure sensor 27 is not provided at the position facing the introduction port 202, but the pressure indicated by the pressure sensor 27 and the pressure at the position facing the introduction port 202 are substantially equal. In the present embodiment, only the physical foaming agent is introduced into the starvation zone 23, but another pressurized fluid other than the physical foaming agent may be simultaneously introduced into the starvation zone 23 to an extent not to affect the effect of the present invention. In this case, the pressurized fluid including the physical foaming agent introduced into the starvation zone 23 has the fixed pressure as described above.

In the present embodiment, the physical foaming agent is supplied from the bomb 100 to the starvation zone 23, through the introduction port 202 via the introduction speed adjustment container 300. The physical foaming agent is subjected to reduction in pressure to a predetermined pressure using the pressure reducing valve 151, and is then introduced through the introduction port 202 into the starvation zone 23 without passing through a pressure increase apparatus or the like. In the present embodiment, control is not performed for the amount of introduction, the time of introduction, and the like of the physical foaming agent introduced into the plasticizing cylinder 210. Thus, it is not necessary to provide a mechanism for controlling these parameters, such as a drive valve using a check valve, an electromagnetic valve, or the like, and the introduction port 202 does not include the drive valve and is always opened. In the present embodiment, by the physical foaming agent supplied from the bomb 100, a section from the pressure reducing valve 151 through the introduction speed adjustment container 300 to the starvation zone 23 in the plasticizing cylinder 210 is maintained at the fixed pressure of the physical foaming agent.

Further, the introduction port 202 for the physical foaming agent has an inner diameter D1 larger than that of an introduction port for a physical foaming agent in a conventional production apparatus. Thus, even a relatively low-pressure physical foaming agent can be efficiently introduced into the plasticizing cylinder 210. Further, even if part of the molten resin comes into contact with the introduction port 202 to be solidified, the introduction port 202 has such a larger inner diameter D1, and thus is free from being completely clogged, thereby allowing the introduction port 202 to function as an introduction port. For example, as the inner diameter of the plasticizing cylinder 210 becomes larger, that is, as the outer diameter of the plasticizing cylinder 210 becomes larger, it is possible to easily cause the inner diameter D1 of the introduction port 202 to be larger. However, in a case where the inner diameter D1 of the introduction port 202 is excessively large, the molten resin remains to cause a molding defect, and the introduction speed adjustment container 300 connected to the introduction port 202 becomes large in size, thereby increasing the overall cost of the apparatus. Thus, a specific size of the inner diameter D1 of the introduction port 202 is preferably 20% to 100%, and more preferably 30% to 80% of the inner diameter of the plasticizing cylinder 210. Alternatively, the inner diameter D1 of the introduction port 202 is preferably 3 mm to 150 mm, and more preferably 5 mm to 100 mm, without depending on the inner diameter of the plasticizing cylinder 210.

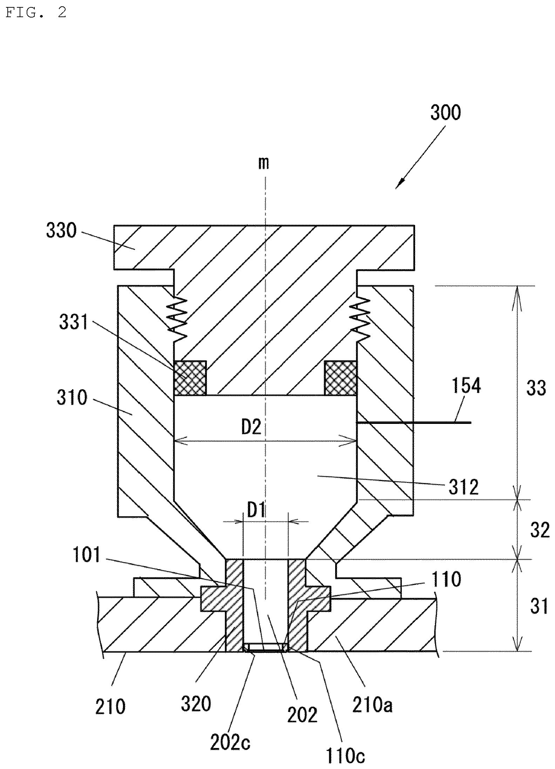

Here, as illustrated in Fig. 2, the inner diameter D1 of the introduction port 202 means the inner diameter of an opening on an inner wall 210a of the plasticizing cylinder 210. The shape of the introduction port 202, that is, the shape of the opening on the inner wall 210a of the plasticizing cylinder 210 is not limited to a perfect circle, and may also be an ellipse or a polygon. In a case where the shape of the introduction port 202 is an ellipse or a polygon, a diameter of a perfect circle having an area equal to the area of the introduction port 202 is defined as the "inner diameter D1 of the introduction port 202".

Next, the introduction speed adjustment container 300 connected to the introduction port 202 will be described. The introduction speed adjustment container 300 has a function of setting the pressure of the physical foaming agent and the pressure in the starvation zone 23 in the plasticizing cylinder 210 to the same fixed pressure, and maintaining the pressure in the starvation zone 23 at the fixed pressure. For example, if a large amount of the physical foaming agent is consumed in the starvation zone 23, there may be a case in which the supply of the physical foaming agent cannot catch up with the consumption to rapidly decrease the pressure in the starvation zone 23. However, with the introduction speed adjustment container 300, the physical foaming agent can be stably supplied, thereby reducing the fluctuation in pressure in the starvation zone 23.

Further, the introduction speed adjustment container 300 is formed to have a certain volume or more, whereby the flow velocity of the physical foaming agent to be introduced into the plasticizing cylinder 210 is made gentle and a time during which the physical foaming agent stays inside the introduction speed adjustment container 300 is secured. The introduction speed adjustment container 300 is directly connected to the plasticizing cylinder 210 heated by the band heater (not illustrated) disposed in the periphery of the plasticizing cylinder 210, and heat on the plasticizing cylinder 210 is also conducted to the introduction speed adjustment container 300. As a result, the physical foaming agent inside the introduction speed adjustment container 300 is heated, which reduces a temperature difference between the physical foaming agent and the molten resin to prevent the temperature of the molten resin, with which the physical foaming agent comes into contact, from being extremely lowered, thereby stabilizing the amount of dissolution (amount of permeation) of the physical foaming agent in the molten resin. That is, the introduction speed adjustment container 300 functions as a buffer container having a function of heating the physical foaming agent. On the other hand, in a case where the volume of the introduction speed adjustment container 300 is excessively large, the overall cost of the apparatus increases. Although the volume of the introduction speed adjustment container 300 also depends on the amount of the molten resin existing in the starvation zone 23, the volume of the introduction speed adjustment container 300 is preferably 5 mL to 20 L, more preferably 10 mL to 2 L, and still more preferably 10 mL to 1 L. By setting the volume of the introduction speed adjustment container 300 within this range, it is possible to secure the time during which the physical foaming agent stays while considering the cost.

As will be described later, the physical foaming agent is consumed in the plasticizing cylinder 210 by coming into contact with and permeating through the molten resin. To maintain the pressure in the starvation zone 23 at a fixed pressure, a physical foaming agent at an amount equivalent to the consumed amount is introduced from the introduction speed adjustment container 300 into the starvation zone 23. If the volume of the introduction speed adjustment container 300 is excessively small, the replacement of the physical foaming agent occurs more frequently. Thus, the temperature of the physical foaming agent becomes unstable, and as a result, the supply of the physical foaming agent may become unstable. Therefore, the introduction speed adjustment container 300 preferably has a volume allowing the physical foaming agent at an amount equivalent to the amount consumed in the plasticizing cylinder 210 in 1 to 10 minutes to stay. In addition, for example, the volume of the introduction speed adjustment container 300 is preferably 0.1 times to 5 times, more preferably 0.5 times to 2 times as large as the volume of the starvation zone 23 to which the introduction speed adjustment container 300 is connected. In the present embodiment, the volume of the starvation zone 23 means the volume of a region (starvation zone 23) in which a portion of the screw 20 where the diameter of the shaft and the depth of the screw flight are constant is located, in the plasticizing cylinder 210 that contains no molten resin to be empty.

As illustrated in Fig. 2, the introduction speed adjustment container 300 mainly includes a cylindrical container body 310, a coupling member 320 that couples the container body 310 to the plasticizing cylinder 210, and a lid 330 of the container body 310. One end of the cylindrical container body 310 is connected to the introduction port 202 through the coupling member 320. The starvation zone 23 in the plasticizing cylinder 210 communicates with an internal space 312 via the introduction port 202. The lid 330 is provided at the other end of the cylindrical container body (the end opposite to the introduction port 202), in a manner openable and closable. The piping 154 for supplying a physical foaming agent to the internal space 312 is connected to the container body 310.

When focusing on the shape of the internal space 312 of the introduction speed adjustment container 300, the introduction speed adjustment container 300 includes a first straight portion 31, a tapered portion 32, and a second straight portion 33. The first straight portion 31 is connected to the introduction port 202, and is formed in a cylindrical shape and has an inner diameter that does not change. The tapered portion 32 is provided adjacent to the first straight portion 31, and has an inner diameter that increases with distance from the introduction port 202. The second straight portion 33 is provided adjacent to the tapered portion 32, and is formed in a cylindrical shape and has an inner diameter that does not change. That is, as illustrated in Fig. 2, the introduction speed adjustment container 300 has a structure in which arrangement is made to align, on a common straight line m, the central axis of the first straight portion 31 that is a cylinder having a smaller inner diameter D1 and the central axis of the second straight portion 33 that is a cylinder having a larger inner diameter D2, and in which the first straight portion 31 and the second straight portion 32 are connected through the tapered surface of the tapered portion 32. In the present embodiment, the extending direction of the straight line m that coincides with the central axis of the first straight portion 31 and the central axis of the second straight portion 33 coincides with the extending direction of the introduction speed adjustment container 300 having a cylindrical shape. In the present embodiment, the first straight portion 31 is constituted by the coupling member 320, and the tapered portion 32 and the second straight portion 33 are constituted by the container body 310.

The lid 330 is provided on the second straight portion 33 of the container body 310, in a manner openable and closable. The lid 330 is preferably openable and closable by a hand of an operator without using a special tool. In the molding of a foamed molded product, there is a case in which setting of molding conditions (condition setting) is performed in advance. In the setting of the molding conditions, the number of rotations of the feed screw 212 or the screw 20 is optimized, and a check is made to see whether the starved state is stably formed in the starvation zone 23. At the same time, a check is also made to see whether the molten resin does not swell from the introduction port 202 into the introduction speed adjustment container 300. Accordingly, the lid 330 is preferably openable and closable by a simple method, without using a bolt, and is preferably configured to allow resin entering the introduction speed adjustment container 300 to be removed. By allowing the lid 330 to be openable and closable by the operator's hand, work efficiency in setting the molding conditions is improved. Provision of a seal mechanism to the lid 330 is optional, but it is possible to use a seal mechanism incorporating a spring, a high-pressure seal mechanism of a clutch-type, or the like. In the present embodiment, a polyimide seal member 331 incorporating a spring is used. The seal member 331 is expanded by the gas pressure of a physical foaming agent staying inside the internal space 312, and the sealing performance is enhanced.

A material forming the introduction speed adjustment container 300 preferably has pressure resistance from the viewpoint of containing a pressurized fluid, and preferably has a large thermal capacity, properties less likely to increase in temperature, and properties likely to remove heat from attached resin from the viewpoint of promoting solidification of the molten resin on the wall surface, and from the viewpoint of reducing entrance of the molten resin into the inside of the container. In addition, from the viewpoint of heating the physical foaming agent, the material forming the introduction speed adjustment container 300 preferably has high thermal conductivity to allow heat from the container body 310 to easily conduct. From these viewpoints, the introduction speed adjustment container 300 is preferably formed of metal such as stainless steel (SUS: Steel Use Stainless) or the like. This applies similarly to the coupling member 320.

### (3) Bring Molten Resin into Starved State

Next, the molten resin is caused to flow to the starvation zone 23, and the molten resin is caused to be brought into a starved state in the starvation zone 23 (step S3 in Fig. 3). The starved state is determined by the balance between the amount of molten resin fed from the upstream side of the starvation zone 23 to the starvation zone 23 and the amount of molten resin fed from the starvation zone 23 to the downstream side of the starvation zone 23, and the starved state is obtained when the former amount is smaller.

In the present embodiment, the compression zone 22 in which the molten resin is compressed and the pressure increases is provided upstream of the starvation zone 23, whereby the molten resin is brought into the starved state in the starvation zone 23. In the compression zone 22, a large-diameter portion 20A is provided that is formed by making the diameter of the shaft of the screw 20 larger (thicker) than that in the plasticization zone 21 located on the upstream side of the compression zone 22, and by making the screw flight gradually shallower. Further, also in the compression zone 22, a seal portion 26 is provided adjacent to the downstream side of the large-diameter portion 20A. In the seal portion 26, the shaft of the screw 20 has a large (thick) diameter similarly to that in the large-diameter portion 20A, but no screw flight is provided. Instead of the screw flight, a plurality of shallow grooves are formed in the shaft of the screw 20. By increasing the diameter of the shaft of the screw 20 in the large-diameter portion 20A and the seal portion 26, a clearance between the inner wall of the plasticizing cylinder 210 and the screw 20 can be reduced, and the amount of resin supplied to the downstream side can also be reduced. Thus, the flow resistance of the molten resin can be increased. Therefore, in the present embodiment, each of the large-diameter portion 20A and the seal portion 26 is a mechanism for increasing the flow resistance of the molten resin.

Note that the seal portion 26 also has an effect of reducing a backward flow of the physical foaming agent, that is, movement of the physical foaming agent from the downstream side to the upstream side of the seal portion 26.

Thanks to the presence of the large-diameter portion 20A and the seal portion 26, the flow rate of resin supplied from the compression zone 22 to the starvation zone 23 decreases, the molten resin is compressed and the pressure increases in the compression zone 22 on the upstream side, and the starvation zone 23 on the downstream side is unfilled with the molten resin (starved state). To enhance the starved state of the molten resin, the screw 20 has a structure in which a portion of the screw 20 located in the starvation zone 23 has a smaller (thinner) shaft diameter and a deeper screw flight, compared with those in a portion of the screw 20 located in the compression zone 22. In addition, the screw 20 preferably has a structure in which a portion of the screw 20 located in the starvation zone 23 has a smaller (thinner) shaft diameter and a deeper screw flight, across the entire starvation zone 23, compared with those in the portion of the screw 20 located in the compression zone 22. Further, the screw 20 preferably has a substantially constant shaft diameter and a substantially constant screw flight depth, across the entire starvation zone 23. With such a configuration, the pressure in the starvation zone 23 can be maintained at a substantially fixed pressure, and the starved state of the molten resin can be stabilized. In the present embodiment, as illustrated in Fig. 1, the starvation zone 23 is formed across a portion of the screw 20 in which the diameter of the shaft and the depth of the screw flight of the screw 20 are constant.

The mechanism for increasing the flow resistance of the molten resin provided in the compression zone 22 is not particularly limited as long as it is a mechanism for temporarily reducing the area of a flow path through which the molten resin passes in order to limit the flow rate of the resin supplied from the compression zone 22 to the starvation zone 23. In the present embodiment, both the large-diameter portion 20A of the screw and the seal portion 26 are used, but only one of them may be used. Examples of another mechanism for increasing the flow resistance, other than the large-diameter portion 20A of the screw and the seal portion 26, include a structure in which a screw flight is provided in a direction reverse to another portion, and a labyrinth structure provided on the screw.

The mechanism for increasing the flow resistance of the molten resin may be provided in the screw as a ring or the like that is a member provided separately from the screw, or may be provided integrally with the screw as a part of the structure of the screw. When the mechanism for increasing the flow resistance of the molten resin is provided as a ring or the like that is a member provided separately from the screw, the size of a clearance portion, which is a flow path of the molten resin, can be changed by replacing the ring. Thus, there is an advantage that the magnitude of the flow resistance of the molten resin can be easily changed.

Further, other than the mechanism for increasing the flow resistance of the molten resin, the molten resin can be brought into the starved state in the starvation zone 23 by alternatively providing, between the compression zone 22 and the starvation zone 23, a backflow prevention mechanism (seal mechanism) for preventing a backward flow of the molten resin from the starvation zone 23 to the compression zone 22 on the upstream side. An example of the backflow prevention mechanism is a seal mechanism such as a ring or a steel ball that is movable to the upstream side by the pressure of the physical foaming agent. However, the backflow prevention mechanism requires a driver, and thus there is a risk that resin might remain. Therefore, it is more preferable to provide the mechanism for increasing the flow resistance, which does not include a driver.

In the present embodiment, to stabilize the starved state of the molten resin in the starvation zone 23, the amount of supply of the thermoplastic resin to be supplied to the plasticizing cylinder 210 may be controlled. This is because it is difficult to maintain the starved state when the amount of supply of the thermoplastic resin is excessively large. In the present embodiment, the amount of supply of the thermoplastic resin is controlled using the general-purpose feed screw 212. By limiting the amount of supply of thermoplastic resin, a metering rate of the molten resin in the starvation zone 23 is greater than a plasticization rate in the compression zone 22. As a result, the density of the molten resin in the starvation zone 23 is stably reduced, and the permeation of the physical foaming agent into the molten resin is enhanced.

In the present embodiment, the length of the starvation zone 23 in the flow direction of the molten resin is preferably long in order to secure the area and time of contact between the molten resin and the physical foaming agent. However, if the length is excessively long, an adverse effect of lengthening the molding cycle and the screw length may occur. Therefore, the length of the starvation zone 23 is preferably 2 times to 12 times, and more preferably 4 times to 10 times as long as the size of the inner diameter of the plasticizing cylinder 210. In addition, the length of the starvation zone 23 preferably covers the entire range of a metering stroke in injection molding. That is, the length of the starvation zone 23 in the flow direction of the molten resin is preferably equal to or longer than the length of the metering stroke in injection molding. The screw 20 moves forward and backward along with plasticization and metering, and injection of the molten resin. To respond to this movement, by setting the length of the starvation zone 23 to be equal to or longer than the length of the metering stroke, the introduction port 202 can be arranged (formed) within the starvation zone 23 at all times during the production of a foamed molded product. That is, even if the screw 20 moves forward and backward during the production of a foamed molded product, the zones other than the starvation zone 23 do not come to the position of the introduction port 202. As a result, the physical foaming agent to be introduced through the introduction port 202 is introduced into the starvation zone 23 at all times during the production of a foamed molded product. By providing such a starvation zone having a sufficient and appropriate size (length) and introducing a physical foaming agent at a fixed pressure into the starvation zone, the starvation zone 23 can be easily maintained at the fixed pressure. In the present embodiment, as illustrated in Fig. 1, the length of the starvation zone 23 is substantially equal to the length of the portion of the screw 20 in which the diameter of the shaft of the screw 20 is constant and the depth of the screw flight is constant, in the screw 20.

Further, the flow speed adjustment zone 25 is provided between the compression zone 22 and the starvation zone 23. When the flow speed of the molten resin in the compression zone 22 on the upstream side of the flow speed adjustment zone 25 is compared with the flow speed of the molten resin in the starvation zone 23 on the downstream side, the flow speed of the molten resin in the starvation zone 23 is faster. The present inventors have found that foaming performance of a foamed molded product to be produced is improved by providing the flow speed adjustment zone 25, serving as a buffer zone, between the compression zone 22 and the starvation zone 23, and by reducing this rapid change (increase) in the flow speed of the molten resin. Details are unknown as to the reasons why the foaming performance of a foamed molded product is improved by providing the flow speed adjustment zone 25, serving as a buffer zone, between the compression zone 22 and the starvation zone 23. However, regarding one of the reasons, it is presumed that, by allowing the molten resin to stay in the flow speed adjustment zone 25, the physical foaming agent coming in from the starvation zone 23 and the molten resin are mixed and kneaded, and that the time of contact is lengthened. In the present embodiment, the flow speed of the molten resin is adjusted by providing a pressure reducing portion and a compressing portion in a portion of the plasticizing screw 20 located in the flow speed adjustment zone 25 illustrated in Fig. 1, that is, by changing the depth of the screw flight, in other words, by changing the size (thickness) of the screw diameter.

### (4) Contact between Molten Resin and Physical Foaming Agent

Next, while the starvation zone 23 is maintained at a fixed pressure, the molten resin in a starved state is brought into contact with the physical foaming agent at the fixed pressure, in the starvation zone 23 (step S4 in Fig. 3). That is, in the starvation zone 23, the molten resin is pressurized at the fixed pressure with the physical foaming agent. The starvation zone 23 is unfilled with the molten resin (starved state) and has a space in which the physical foaming agent can exist, and thus the physical foaming agent and the molten resin can be efficiently brought into contact with each other. The physical foaming agent in contact with the molten resin permeates through the molten resin to be consumed. When the physical foaming agent is consumed, the physical foaming agent staying in the introduction speed adjustment container 300 is supplied to the starvation zone 23. As a result, the pressure in the starvation zone 23 is maintained at the fixed pressure, and the molten resin continues being in contact with the physical foaming agent at the fixed pressure.

In conventional foam molding using a conventional physical foaming agent, a predetermined amount of a high-pressure physical foaming agent is forcibly introduced into a plasticizing cylinder within a predetermined time. Thus, it is necessary to increase the pressure of the physical foaming agent to the high pressure and to accurately control the amount of introduction, the time of introduction, and the like of the physical foaming agent into the molten resin, and only the time of introduction that is short is given for allowing the physical foaming agent to come into contact with the molten resin. In contrast, in the present embodiment, instead of forcibly introducing the physical foaming agent into the plasticizing cylinder 210, a physical foaming agent at a fixed pressure is continuously supplied into the plasticizing cylinder such that the pressure in the starvation zone 23 is fixed, and the physical foaming agent is continuously brought into contact with the molten resin. As a result, the amount of dissolution (amount of permeation) of the physical foaming agent in the molten resin determined by a temperature and a pressure is stabilized. In addition, the physical foaming agent of the present embodiment is always in contact with molten resin, and thus a necessary and sufficient amount of the physical foaming agent can permeate through the molten resin. As a result, the foamed molded product produced in the present embodiment has fine foam cells even though a low-pressure physical foaming agent is used as compared with that of the conventional molding method using the conventional physical foaming agent.

Further, in the production method of the present embodiment, it is not necessary to control the amount of introduction, the time of introduction, and the like of the physical foaming agent. Thus, it is not necessary to provide a drive valve such as a check valve or an electromagnetic valve, and a control mechanism for controlling these, thereby enabling reducing the cost of the apparatus. In addition, the physical foaming agent used in the present embodiment has a pressure lower than that of the conventional physical foaming agent, and thus a load for the apparatus is smaller.

In the present embodiment, the starvation zone 23 is always maintained at a fixed pressure during the production of a foamed molded product. That is, to compensate for the physical foaming agent consumed inside the plasticizing cylinder, all the steps of the method for producing a foamed molded product are performed while continuously supplying the physical foaming agent at the fixed pressure. Further, in the present embodiment, for example, in a case where injection molding of a plurality of shots is continuously performed, molten resin for the next shot is prepared in the plasticizing cylinder during an injecting step, a cooling step of a molded product, and an extracting step of the molded product, and the molten resin for the next shot is pressurized at the fixed pressure with the physical foaming agent. That is, in the injection molding of a plurality of shots performed continuously, one cycle of injection molding including a plasticizing and metering step, the injecting step, the cooling step of a molded product, the extracting step of the molded product, and the like is performed, in a state where molten resin, and a physical foaming agent at a fixed pressure always exist and are in contact with each other, inside the plasticizing cylinder, that is, in a state where the molten resin is constantly pressurized at the fixed pressure with the physical foaming agent, inside the plasticizing cylinder. Likewise, in a case where continuous molding such as extrusion molding is performed, the molding is performed, in a state where molten resin, and a physical foaming agent at a fixed pressure always exist and are in contact with each other, inside the plasticizing cylinder, that is, in a state where the molten resin is constantly pressurized at the fixed pressure with the physical foaming agent, inside the plasticizing cylinder.

### (5) Foam Molding

Next, the molten resin brought into contact with the physical foaming agent is molded into a foamed molded product (step S5 in Fig. 3). The plasticizing cylinder 210 used in the present embodiment has the recompression zone 24 that is arranged downstream of and adjacent to the starvation zone 23, and in which the molten resin is compressed and the pressure increases. First, the molten resin in the starvation zone 23 is caused to flow into the recompression zone 24 by rotation of the plasticizing screw 20. The pressure of the molten resin containing the physical foaming agent is adjusted in the recompression zone 24, and is fed forward of the plasticizing screw 20 and metered. At this time, the internal pressure of the molten resin fed forward of the plasticizing screw 20 is controlled as a screw back pressure by a hydraulic motor or an electric motor (not illustrated) connected to the backward side of the plasticizing screw 20. In the present embodiment, to stabilize resin density by causing the molten resin and the physical foaming agent to be uniformly compatible with each other without separating the physical foaming agent from the molten resin, the internal pressure of the molten resin fed forward of the plasticizing screw 20, that is, the screw back pressure is preferably controlled to be higher than the fixedly maintained pressure in the starvation zone 23 by about 1 to 6 MPa. Note that, in the present embodiment, a check ring 50 is provided at the tip of the screw 20 such that the compressed resin forward of the screw 20 does not flow backward to the upstream side. As a result, at the time of metering, the pressure in the starvation zone 23 is not affected by the resin pressure forward of the screw 20.

The method for molding a foamed molded product is not particularly limited, and the molded product can be molded by, for example, injection foam molding, extrusion foam molding, foam blow molding, or the like. In the present embodiment, injection foam molding is performed by filling the cavity (not illustrated) in the mold with metered molten resin by injecting the metered molten resin from the plasticizing cylinder 210 illustrated in Fig. 1. For the injection foam molding, a short-shot method or a core-back method may be used. The short-shot method is a method in which a mold cavity is filled with molten resin having a filling volume of 75% to 95% of the volume of the mold cavity to be filled while bubbles are expanded. The core-back method is a method in which a mold cavity is filled with molten resin having a filling amount of 100% of the volume of the mold cavity and then the volume of the cavity is enlarged, causing foaming. The resulting foamed molded product contains foam cells therein. Thus, shrinkage of the thermoplastic resin during cooling is reduced, and sink marks and warpage are reduced, thereby enabling obtaining a molded product having a low specific gravity.

In the production method according to the present embodiment described above, it is not necessary to control the amount of introduction, the time of introduction, and the like of a physical foaming agent into molten resin. Thus, it is possible to omit or simplify a complex controller to reduce the cost of the apparatus. In the method for producing a foamed molded product according to the present embodiment, molten resin in a starved state and a physical foaming agent at a fixed pressure are brought into contact with each other in the starvation zone 23 while the starvation zone 23 is maintained at the fixed pressure. As a result, it is possible to stabilize the amount of dissolution (amount of permeation) of the physical foaming agent with respect to the molten resin with a simple mechanism.

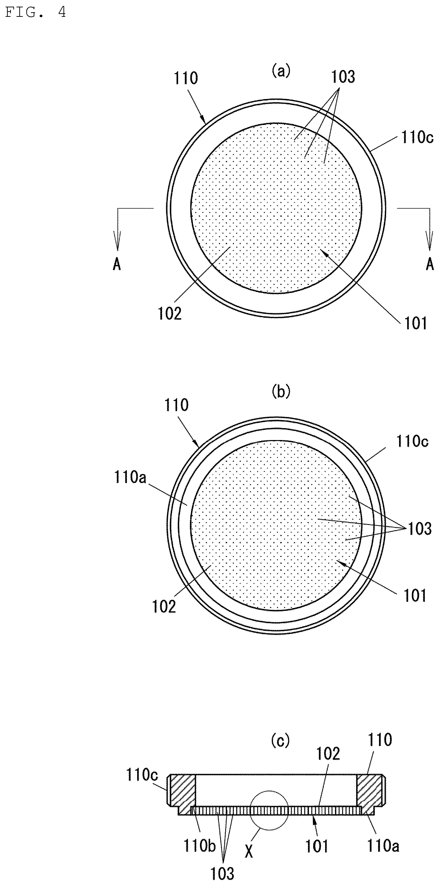

As illustrated in Figs. 1 and 2, the production apparatus 1000 of the present embodiment includes a physical foaming agent introduction filter 101 (hereinafter, abbreviated as a "filter 101" in some cases) according to the present invention. As illustrated in Fig. 4, the filter 101 is fitted inside a holder 110.

The filter 101 is formed in a disk shape, and is set to have a thickness of about 2 to 3 mm and a diameter of about 30 mm.

The holder 110 is formed in a cylindrical shape. In the holder 110, a ring-shaped fitting portion 110a is formed on one end surface (a lower end surface in Fig. 4(c)) to protrude in the axial direction of the holder 110, and an annular bottom surface 110b is provided on a bottom portion of the fitting portion 110a. The filter 101 is fitted inside the ring-shaped fitting portion 110a coaxially therewith, and a bottom surface of the filter 101 abuts on the bottom surface 110b, whereby the filter 101 is positioned and fixed to the fitting portion 110a. In this state, a surface of the filter 101 and a tip surface of the fitting portion 110a are flush with each other.

An external thread 110c is formed on the outer peripheral surface of the holder 110.

On the other hand, as illustrated in Fig. 2, a diameter D1 of the introduction port 202 of the coupling member 320 is equal to the diameter of the holder 110, and an internal thread 202c is formed at a lower end portion of the inner peripheral surface of the introduction port 202.

Then, the holder 110 holding the filter 101 is inserted into the introduction port 202, and the external thread 110c of the holder 110 is screwed into the internal thread 202c of the introduction port 202, whereby the filter 101 is attached to the introduction port 202 through the holder 110. In this state, a lower end surface of the filter 101 and a lower end surface of the coupling member 320 are flush with each other. Thus, the filter 101 faces the starvation zone 23 in the plasticizing cylinder 210.

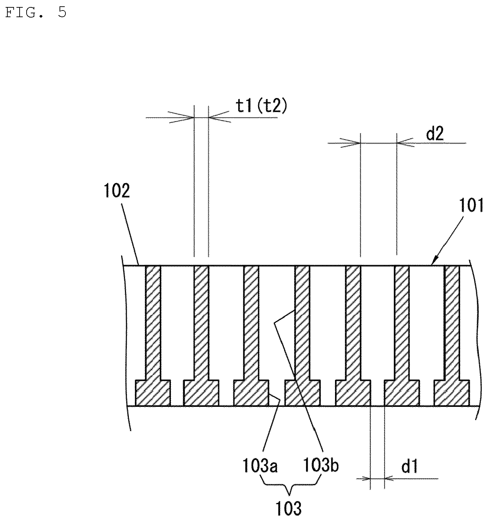

As illustrated in Figs. 4 and 5, the filter 101 includes a disk-shaped filter body 102, and a large number (a plurality) of fine holes 103 provided in the filter body 102 to pass through the filter body 102 in the thickness direction of the filter body 102.

Each of the fine holes 103 includes a resin-contact-side hole 103a that opens toward one surface side of the filter body 102 and is adapted to be in contact with molten resin, and a physical foaming agent introduction hole 103b that opens toward the other surface side of the filter body 102 and communicates with the resin-contact-side hole 103a to allow a physical foaming agent to be introduced into the physical foaming agent introduction hole 103b.

Further, the filter 101 is formed of a metal fine penetrating porous material produced using a metal 3D printer.

That is, as one of methods for producing a three-dimensionally shaped object in a three-dimensionally shaping apparatus for producing a metal three-dimensionally shaped object, that is, a so-called metal 3D printer, a metal powder additive manufacturing method is known. In this method, a three-dimensionally shaped object is produced by laminating sintered layers through repeated cycles in each of which a powder layer is formed by uniformly applying metal material powder and the material powder within a predetermined irradiation region on the powder layer is then melted and solidified by irradiating the predetermined irradiation region with a laser beam or an electron beam.

In the present embodiment, while the filter body 102 is produced in the metal powder additive manufacturing method, the large number of fine holes 103 including the resin-contact-side holes 103a and the physical foaming agent introduction holes 103b are formed.

The filter 101 is not limited to a filter formed of metal, and may be formed of resin.

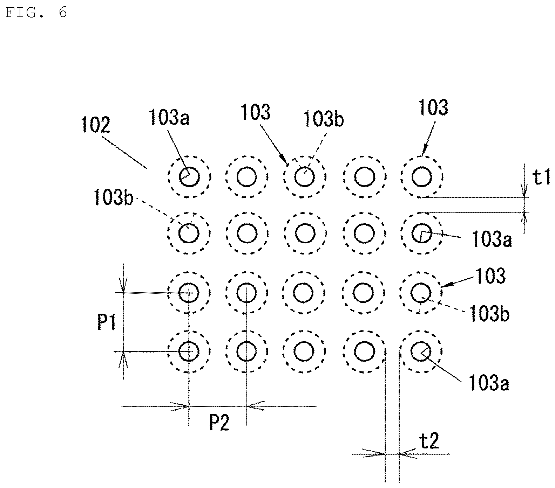

The resin-contact-side hole 103a and the physical foaming agent introduction hole 103b are coaxially arranged, and the diameter of the resin-contact-side hole 103a is equal to or smaller than the diameter of the physical foaming agent introduction hole 103b. In the present embodiment, as illustrated in Figs. 5 and 6, the diameter of the resin-contact-side hole 103a is set to be smaller than the diameter of the physical foaming agent introduction hole 103b (for example, the diameter of the resin-contact-side hole 103a is set to be about one-half of the diameter of the physical foaming agent introduction hole 103b). In addition, the axial length of the resin-contact-side hole 103a is shorter than the axial length of the physical foaming agent introduction hole 103b.

Further, the diameter d1 of the resin-contact-side hole 103a is 10 to 80 µm, and the diameter d2 of the physical foaming agent introduction hole 103b is 20 to 400 µm.

Here, the diameter d1 of the resin-contact-side hole 103a is defined as 10 to 80 µm, because it is technically difficult to form the resin-contact-side hole to have a diameter of smaller than 10 µm, and because, when the diameter d1 of the resin-contact-side hole 103a exceeds 80 µm, molten resin enters the resin-contact-side hole 103a to solidify and the resin-contact-side hole 103a is likely to be clogged.

In addition, the diameter d2 of the physical foaming agent introduction hole 103b is defined as 20 to 400 µm, because, when the diameter d2 of the physical foaming agent introduction hole is smaller than 20 µm, the flow of a physical foaming agent is lowered to make it difficult to reliably introduce the physical foaming agent into molten resin in a starved state, and because, when the diameter d2 exceeds 400 µm, the diameter of the physical foaming agent introduction hole 103b becomes excessively large and the number of physical foaming agent introduction holes 103b is reduced.

Further, the resin-contact-side hole 103a and the physical foaming agent introduction hole 103b have respective circular cross-sectional shapes in the present embodiment. However, the shapes of these holes are not limited to the circular shapes. Each of the resin-contact-side hole 103a and the physical foaming agent introduction hole 103b may have a triangular shape, a polygonal shape of a quadrangle or more, an oval shape, an elliptical shape, a cloud shape, a star shape, or the like, and these shapes may mixedly exist as appropriate.

In a case where the cross-sectional shapes of the resin-contact-side hole 103a and the physical foaming agent introduction hole 103b are not circular, the diameter of the resin-contact-side hole 103a is defined as the diameter of a perfect circle having an area equal to the area of the cross section of the resin-contact-side hole 103a, and the diameter of the physical foaming agent introduction hole 103b is defined as the diameter of a perfect circle having an area equal to the area of the cross section of the physical foaming agent introduction hole 103b.

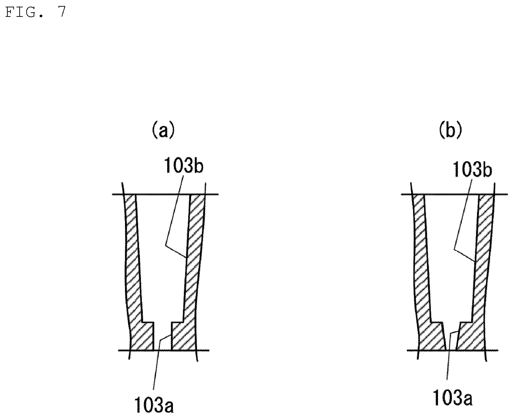

In the present embodiment, the inner peripheral surface of the resin-contact-side hole 103a and the inner peripheral surface of the physical foaming agent introduction hole 103b are formed straight in the axial direction. However, the formation of the inner peripheral surfaces is not limited to this formation. For example, as illustrated in Fig. 7(a), the inner peripheral surface of the physical foaming agent introduction hole 103b may be formed to be inclined with respect to the axial direction. In this case, the physical foaming agent introduction hole 103b is formed to cause the diameter thereof to gradually decrease toward the resin-contact-side hole 103a. As illustrated in Fig. 7(b), the inner peripheral surface of the physical foaming agent introduction hole 103b and the inner peripheral surface of the resin-contact-side hole 103a may be formed to be inclined with respect to the axial direction. In this case, the physical foaming agent introduction hole 103b is formed to cause the diameter thereof to gradually decrease toward the resin-contact-side hole 103a, and the resin-contact-side hole 103a is formed to cause the diameter thereof to gradually decrease away from the physical foaming agent introduction hole 103b.

In the case illustrated in Fig. 7(a), for the diameter of the physical foaming agent introduction hole 103b, the diameter of the inlet side thereof from which the physical foaming agent is introduced is the maximum diameter. In the case illustrated in Fig. 7(b), for the diameter of the physical foaming agent introduction hole 103b, the diameter of the inlet side thereof from which the physical foaming agent is introduced is the maximum diameter, and for the diameter of the resin-contact-side hole 103a, the diameter of the inlet side thereof axially adjacent to the physical foaming agent introduction hole 103b is the maximum diameter.

As illustrated in Fig. 6, the plurality (a large number) of fine holes 103 are provided at predetermined intervals longitudinally and laterally on the surface of the disk-shaped filter body 102, and a pitch P1 between the fine holes 103,103 longitudinally adjacent to each other is equal to a pitch P2 between the fine holes 103,103 laterally adjacent to each other. However, the pitch P1 and the pitch P2 may be different from each other.

In addition, each of a thickness t1 of a separation wall between the physical foaming agent introduction holes 103b, 103b longitudinally adjacent to each other, and a thickness t2 of a separation wall between the physical foaming agent introduction holes 103b, 103b laterally adjacent to each other is 0.01 to 1.0 mm.

Here, the thicknesses t1, t2 of the separation walls between the physical foaming agent introduction holes 103b, 103b longitudinally and laterally adjacent to each other are defined as 0.01 to 1.0 mm, because, when the thicknesses t1, t2 of the separation walls are thinner than 0.01 mm, the thicknesses t1, t2 of the separation walls become excessively thin to cause the strength of the physical foaming agent introduction filter 101 to decrease, and because, when the thicknesses t1, t2 of the separation walls exceed 1.0 mm, the thicknesses of the separation walls t1, t2 become excessively thick and the number of physical foaming agent introduction holes 103b is reduced.

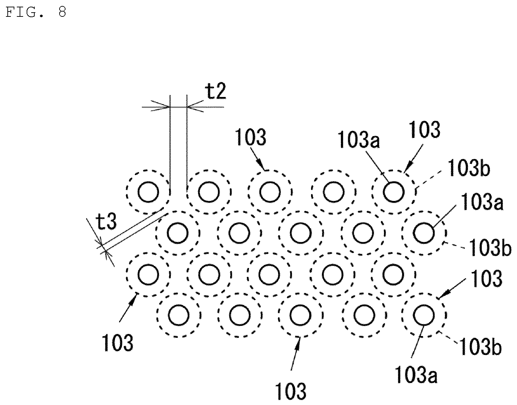

In the present embodiment, the plurality (a large number) of fine holes 103 are arranged longitudinally and laterally. However, the arrangement of the fine holes 103 is not limited to this arrangement. For example, as illustrated in Fig. 8, the fine holes 103 are arranged in a staggered pattern, and the physical foaming agent introduction holes 103b, 103b longitudinally adjacent to each other may be arranged to longitudinally partially overlap with each other. With this arrangement, it is possible to increase the number of fine holes 103 per unit area.

In this case, a thickness t3 of the separation wall between the physical foaming agent introduction holes 103b, 103b obliquely adjacent to each other is preferably thinner than the thickness t2 of the separation wall between the physical foaming agent introduction holes 103b, 103b laterally adjacent to each other. In addition, the thickness t3 of the separation wall between the physical foaming agent introduction holes 103b, 103b obliquely adjacent to each other is 0.01 to 1.0 mm.

According to the present embodiment, the diameter of the resin-contact-side hole 103a of the physical foaming agent introduction filter 101 is equal to or smaller than the diameter of the physical foaming agent introduction hole 103b, and is 10 to 80 µm. Thus, by providing such a physical foaming agent introduction filter 101 in the introduction port 202 for introducing a physical foaming agent into the starvation zone 23 in the plasticizing cylinder 210, it is possible to reduce entrance of molten resin existing in the starvation zone 23 into the resin-contact-side holes 103a. Therefore, the molten resin does not solidify and does not remain in the introduction port 202 in which the physical foaming agent introduction filter 101 is provided.

In addition, the physical foaming agent can be reliably introduced into the molten resin in the starved state (starvation zone 23), from the introduction port 202 through the resin-contact-side holes 103a.

Therefore, it is possible to reduce a vent-up phenomenon and stably supply the physical foaming agent to the molten resin in the starved state (starvation zone 23).

Further, the diameter of the physical foaming agent introduction hole 103b is 20 to 400 µm. Thus, it is possible to reliably and stably introduce the physical foaming agent into the molten resin in the starved state (starvation zone 23).

In addition, each of the separation wall t1 between the physical foaming agent introduction holes 103b, 103b longitudinally adjacent to each other and the thickness t2 of the separation wall between the physical foaming agent introduction holes 103b, 103b laterally adjacent to each other is 0.01 to 1.0 mm. Thus, it is possible to sufficiently secure the number of physical foaming agent introduction holes 103b while reducing a decrease in strength of the physical foaming agent introduction filter 101.

Next, examples will be described.

Each of foamed molded products was produced using the production apparatus for producing a foamed molded product including a corresponding one of the physical foaming agent introduction filters 101 according to the present invention described above (Examples 1 to 5).

On the other hand, each of foamed molded products was produced using a production apparatus for producing a foamed molded product including a corresponding one of physical foaming agent introduction filters that are different from the filter according to the present invention (Comparative Examples 1 and 2).

Then, for each of the examples and the comparative examples, confirmation was made as to pressure stability in the starvation zone, and a maintenance cycle (the number of shots, where one cycle in which one foamed molded product is produced is counted as one shot). An increase in the number of maintenance cycles means that molten resin is less likely to enter the introduction port 202, that clogging by the resin does not occur, and that foamed molded products can be produced for a long time period.

In addition, in the item of "Pressure stability in starvation zone" in Table 1, "o ±3% (6%, 5%, 8%)" means that the pressure in the starvation zone is stably maintained within a range of ±3% (6%, 5%, 8%) with respect to a fixed pressure o.

The results are shown in Table 1.

**[Table 1]**

| | Diameter of resin-contact-side hole (mm) Depth 0.1 mm | Diameter of physical foaming agent introduction hole (mm) | Pitch (mm) | Minimum separation wall (mm) | Number of physical foaming agent introduction holes per square centimeter | Pressure stability in starvation zone | Maintenance cycle |
|---|---|---|---|---|---|---|---|
| Example 1 | 0.02 | 0.2 | 0.5 | 0.1 | 1,089 20% collapsed | ○ ± 3% | 200,000 shots |
| Example 2 | 0.08 Upper limit | 0.2 | 0.5 | 0.1 | 1,089 5% collapsed | ○ ± 6% | 20,000 |
| Example 3 | 0.05 Average diameter | 0.1 | 0.3 | 0.1 | 2,500 15% collapsed | ○ ± 5% | 100,000 |
| Example 4 | 0.02 | 0.02 | 0.1 | 0.06 | 15,625 30% collapsed | ○ ± 5% | 200,000 |
| Example 5 | 0.03 | 0.4 | 0.9 | 0.1 | 400 30% collapsed | ○ ± 8% | 170,000 |
| Comparative Example 1 | 0.1 | 0.2 | 0.5 | 0.1 | 1,089 Not collapsed at all | × Clogged at 100th shot | 500 shots |
| Comparative Example 2 | 0.03 | 0.5 | 1.1 | 0.1 | 256 | × ± 12% | 170,000 |

In each of Examples 1 to 5, the diameter of a resin-contact-side hole is within a range of 10 to 80 µm, and the diameter of a physical foaming agent introduction hole is within a range of 20 to 400 µm, both of which are within the scope of the present invention.

On the other hand, in Comparative Example 1, the diameter of a resin-contact-side hole is 0.1 mm (100 µm), and the diameter of a physical foaming agent introduction hole is 0.2 mm (200 µm). That is, the diameter of the resin-contact-side hole is outside the scope of the present invention, and the diameter of the physical foaming agent introduction hole is within the scope of the present invention.

In Comparative Example 2, the diameter of a resin-contact-side hole is 0.03 mm (30 µm), and the diameter of a physical foaming agent introduction hole is 0.5 mm (500 µm). That is, the diameter of the resin-contact-side hole is within the scope of the present invention, and the diameter of the physical foaming agent introduction hole is outside the scope of the present invention.

As illustrated in Table 1, it can be seen that in each of Examples 1 to 5, the pressure in the starvation zone can be stably maintained at a fixed pressure and the maintenance cycle is also lengthened.

Thus, it is possible to reduce entrance of molten resin into the resin-contact-side holes and clogging of the resin-contact-side holes, and it is also possible to reliably introduce a physical foaming agent into molten resin in a starved state from the physical foaming agent introduction holes through the resin-contact-side holes.

In contrast, in Comparative Example 1, the diameter of the resin-contact-side hole is 0.1 mm (100 µm), which is larger than that in each of Examples 1 to 5. Thus, the molten resin enters and solidifies in the resin-contact-side holes, and the pressure in the starvation zone cannot be stably maintained at a fixed pressure. In addition, the maintenance cycle is about 500 shots, which is shorter. Further, in Comparative Example 2, the diameter of the physical foaming agent introduction hole is 0.5 mm (500 µm), which is larger than that in each of Examples 1 to 5. Thus, the number of physical foaming agent introduction holes (the number per unit area) is reduced. Therefore, it is difficult to reliably introduce a physical foaming agent, and the pressure stability in the starvation zone becomes lower than that in each of Examples 1 to 5.

### (Second Embodiment)

Next, a second embodiment will be described.

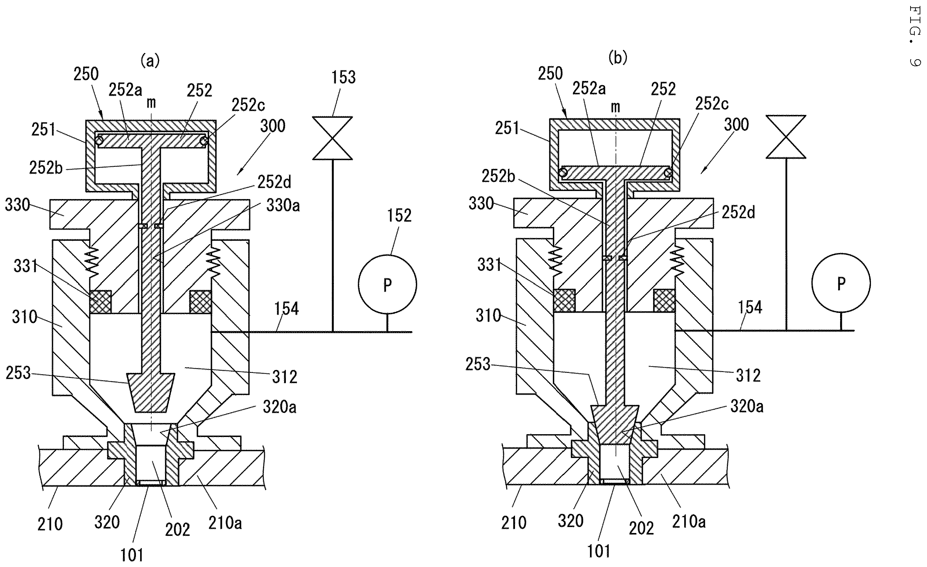

Fig. 9 includes cross-sectional views each illustrating an introduction speed adjustment container 300 in a production apparatus according to the second embodiment.

The second embodiment is different from the first embodiment in that an introduction port opening and closing mechanism 250 that can open and close the introduction port 202 is provided in the introduction speed adjustment container 300. Thus, this point will be described below, and the same configurations as those of the first embodiment may be denoted by the same reference signs and the description thereof may be omitted.

When gas in the plasticizing cylinder 210 is degassed at the time of cleaning or the like after the completion of molding of a foamed product using the production apparatus 1000, gas (a physical foaming agent) stored in the introduction speed adjustment container 300 is introduced all at once into the plasticizing cylinder 210. Thus, there is a case in which a loud discharge sound is generated.

The introduction port opening and closing mechanism 250 is provided to reduce this foaming sound. Hereinafter, the configuration of the introduction port opening and closing mechanism 250 will be described.

As illustrated in Fig. 9, the introduction port opening and closing mechanism 250 includes an air cylinder 251, and a piston 252 provided to the air cylinder 251.

The air cylinder 251 is formed in a cylindrical shape, and has a lower end fixed to an upper surface of the lid 330 of the introduction speed adjustment container 300.

The piston 252 includes a disk-shaped flange 252a that can axially reciprocate inside the air cylinder 251, and a piston rod 252b having a base end (upper end in Fig. 9) fixed to a central portion of a lower surface of the flange 252a. In addition, a packing member 252c in close contact with the inner peripheral surface of the air cylinder 251 in a manner axially slidable is attached to an outer peripheral portion of the flange 252a.

The air cylinder 251 is configured to be able to alternately take in and out compressed air to and from the upper side and the lower side of the flange 252a, inside the air cylinder 251. With this configuration, the flange 252a can reciprocate in the axial direction.

A through hole 330a is formed in a central portion of the lid 330 to pass therethrough in the axial direction of the piston rod 252b, and the piston rod 252b is inserted through the through hole 330a to be able to reciprocate in the axial direction. A packing member 252d in close contact with the inner peripheral surface of the through hole 330a in a manner axially slidable is attached to an outer peripheral portion of the piston rod 252b.

Further, a plug member 253 that opens and closes the introduction hole 202 is provided integrally with the piston rod 252b at a tip end (lower end in Fig. 9) of the piston rod 252b. The plug member 253 is formed in a truncated cone shape, and has an outer peripheral surface formed as an inclined surface whose diameter gradually decreases toward a tip end (lower end) thereof.

On the other hand, in the coupling member 320 forming the introduction hole 202, a receiving surface 320a having a conical-surface-like shape is formed on the inlet side (upper end side in Fig. 9) of the introduction hole 202. The receiving surface 320a is formed as an inclined surface whose diameter gradually increases toward the upper side thereof. The inclined surface of the receiving surface 320a and the inclined surface of the plug member 253 are inclined at the same angle with respect to the straight line m.

As illustrated in Fig. 9(a), in a state where the piston 252 is drawn up, that is, in a state where the flange 252a is located on the inner upper surface side of the air cylinder 251, the plug member 253 is located at a position separated upward from the introduction hole 202, and a physical foaming agent can be supplied from the introduction speed adjustment container 300 into the introduction port 202.

On the other hand, as illustrated in Fig. 9(b), in a state where the piston 252 is pushed down, that is, in a state where the flange 252a is located on the inner lower surface side of the air cylinder 251, the plug member 253 enters the introduction port 202 to cause the outer peripheral surface of the plug member 253 to come into close contact with the receiving surface 320a and to seal the introduction port 202.

By the production apparatus 1000 including the introduction speed adjustment container 300 provided with such an introduction port opening and closing mechanism 250, the followings can be achieved. That is, when a foamed molded product is molded, the introduction port 202 can be opened to be in an opened state by the introduction port opening and closing mechanism 250, as a result of which a physical foaming agent can be stably introduced into molten resin in the starvation zone 23. When the plasticizing cylinder 210 is degassed after the completion of the molding of the foamed molded product, the introduction port 202 can be closed to be sealed by the introduction port opening and closing mechanism 250, whereby, with the closure, gas (a physical foaming agent) stored in the introduction speed adjustment container 300 is not introduced into the plasticizing cylinder 210, as a result of which generation of a loud foaming sound can be reduced.

In the present embodiment, the physical foaming agent introduction filter 101 is provided in the introduction port 202, in the production apparatus 1000 including the introduction speed adjustment container 300 provided with the introduction port opening and closing mechanism 250. However, in the case of reducing the foaming sound as described above, the application of the present embodiment may be made to a production apparatus for producing a foamed molded product in which the physical foaming agent introduction filter 101 is not provided in the introduction port 202.

### Reference Signs List

21 plasticization zone
23 starvation zone
100 bomb (physical foaming agent supply mechanism)
101 filter
102 filter body
103 fine hole
103a resin-contact-side hole
103b physical foaming agent introduction hole
202 introduction port
210 plasticizing cylinder
250 introduction port opening and closing mechanism
300 introduction speed adjustment container
1000 production apparatus

## Claims

1. A physical foaming agent introduction filter (101) used when a physical foaming agent is introduced into molten resin in a starved state, the filter comprising:
a filter body (102); and
a plurality of fine holes (103) provided in the filter body (102) to pass through the filter body (102) in a thickness direction of the filter body (102),
wherein each of the fine holes (103) includes:
a resin-contact-side hole (103a) that opens toward one surface side of the filter body (102), and that is adapted to be in contact with the molten resin; and
a physical foaming agent introduction hole (103b) that opens toward another surface side of the filter body (102), and that communicates with the resin-contact-side hole (103a), to allow the physical foaming agent to be introduced into the physical foaming agent introduction hole (103b),
wherein the resin-contact-side hole (103a) has a diameter that is equal to or smaller than a diameter of the physical foaming agent introduction hole (103b), and that is 10 to 80 µm, and
**characterized in that**
the plurality of fine holes (103) are provided at predetermined intervals longitudinally and laterally, and each of a thickness of a separation wall between the physical foaming agent introduction holes (103b) longitudinally adjacent to each other and a thickness of a separation wall between the physical foaming agent introduction holes (103b) laterally adjacent to each other is 0.01 to 1.0 mm.

2. The physical foaming agent introduction filter (101) according to claim 1,
wherein the diameter of the physical foaming agent introduction hole (103b) is 20 to 400 µm.

3. An apparatus for producing a foamed molded product, the apparatus comprising:
a plasticizing cylinder (210) having a plasticization zone (21) in which thermoplastic resin is plasticized and melted to become molten resin, and a starvation zone (23) in which the molten resin is brought into a starved state, the plasticizing cylinder (210) being provided with an introduction port (202) configured to introduce a physical foaming agent into the starvation zone (23);
an introduction speed adjustment container (300) connected to the introduction port (202); and
a physical foaming agent supply mechanism connected to the introduction speed adjustment container (300), the physical foaming agent supply mechanism being configured to supply the physical foaming agent to the plasticizing cylinder (210) via the introduction speed adjustment container (300),
wherein the physical foaming agent introduction filter (101) according to claim 1 or 2 is provided in the introduction port (202),
wherein a pressurized fluid including the physical foaming agent at a fixed pressure is supplied to the introduction speed adjustment container (300), and the pressurized fluid at the fixed pressure is introduced from the introduction speed adjustment container (300) into the starvation zone (23), to maintain the starvation zone at the fixed pressure (23),
wherein while the starvation zone (23) is maintained at the fixed pressure, the molten resin in the starved state is brought into contact with the pressurized fluid including the physical foaming agent at the fixed pressure, in the starvation zone (23), and
wherein the molten resin brought into contact with the pressurized fluid including the physical foaming agent is molded into a foamed molded product.

4. The apparatus for producing a foamed molded product according to claim 3,
wherein the introduction speed adjustment container (300) is provided with an introduction port opening and closing mechanism (250) capable of opening and closing the introduction port (300).

5. A method for producing a foamed molded product, by using a production apparatus including:
a plasticizing cylinder (210) having a plasticization zone (21) in which thermoplastic resin is plasticized and melted to become molten resin, and a starvation zone (23) in which the molten resin is brought into a starved state, the plasticizing cylinder being provided with an introduction port (202) configured to introduce a physical foaming agent into the starvation zone;
an introduction speed adjustment container (300) connected to the introduction port (202); and
the physical foaming agent introduction filter (101) according to claim 1 or 2 provided in the introduction port (202),
the method comprising:
plasticizing and melting the thermoplastic resin to form the molten resin, in the plasticization zone (21);
supplying a pressurized fluid including the physical foaming agent at a fixed pressure to the introduction speed adjustment container (300), and introducing the pressurized fluid at the fixed pressure from the introduction speed adjustment container (300) into the starvation zone (23), to maintain the starvation zone (23) at the fixed pressure;
bringing the molten resin into the starved state, in the starvation zone (23);
bringing, while maintaining the starvation zone (23) at the fixed pressure, the molten resin in the starved state into contact with the pressurized fluid, in the starvation zone (23); and
molding the molten resin brought into contact with the pressurized fluid including the physical foaming agent into a foamed molded product.

6. The method for producing a foamed molded product according to claim 5,
wherein the introduction speed adjustment container (300) is provided with an introduction port opening and closing mechanism (250) capable of opening and closing the introduction port (202),
wherein the introduction port (202) is opened by the introduction port opening and closing mechanism (250), when the molding into the foamed molded product is performed, and
wherein the introduction port (202) is closed by the introduction port opening and closing mechanism (250), when the plasticizing cylinder (210) is degassed after the molding into the foamed molded product has been completed.

## Patentansprüche

1. Einbringungsfilter für physikalische Treibmittel (101) zur Verwendung, wenn ein physikalisches Treibmittel in ein geschmolzenes Harz in einem unterversorgten Zustand eingebracht wird, wobei der Filter Folgendes umfasst:
einen Filterkörper (102); und
eine Vielzahl von feinen Löchern (103), die so im Filterkörper (102) bereitgestellt sind, dass sie in Dickenrichtung des Filterkörpers (102) durch den Filterkörper (102) hindurchverlaufen,
wobei jedes der feinen Löcher (103) Folgendes umfasst:
ein harzkontaktseitiges Loch (103a), das sich zu einer Oberflächenseite des Filterkörpers (102) hin öffnet und angepasst ist, um mit dem geschmolzenen Harz in Kontakt zu sein; und
ein Loch zur Einbringung eines physikalischen Treibmittels (103b), das sich zur anderen Oberflächenseite des Filterkörpers (102) hin öffnet und mit dem harzkontaktseitigen Loch (103a) kommuniziert, sodass das physikalische Treibmittel in das Loch zur Einbringung eines physikalischen Treibmittels (103b) eingebracht werden kann,
wobei das harzkontaktseitige Loch (103a) einen Durchmesser aufweist, der gleich groß wie oder kleiner als der Durchmesser des Lochs zur Einbringung eines physikalischen Treibmittels (103b) ist und der 10 bis 80 µm beträgt, und
**dadurch gekennzeichnet, dass** die Vielzahl von feinen Löchern (103) in Längs- und Seitenrichtung in vorbestimmten Abständen bereitgestellt ist und jede aus der Dicke einer Trennwand zwischen den Löchern zur Einbringung eines physikalischen Treibmittels (103b), die in Längsrichtung nebeneinander liegen, und der Dicke einer Trennwand zwischen den Löchern zur Einbringung eines physikalischen Treibmittels (103b), die in Seitenrichtung nebeneinander liegen, 0,01 bis 1,0 mm beträgt.

2. Einbringungsfilter für physikalische Treibmittel (101) nach Anspruch 1,
wobei der Durchmesser des Lochs zur Einbringung eines physikalischen Treibmittels (103b) 20 bis 400 µm beträgt.

3. Vorrichtung zur Herstellung eines geschäumten Formprodukts, wobei die Vorrichtung Folgendes umfasst:
einen Plastifizierungszylinder (210) mit einer Plastifizierungszone (21), in der thermoplastisches Harz plastifiziert und zu einem geschmolzenen Harz geschmolzen wird, und einer Unterversorgungszone (23), in der das geschmolzene Harz in einen unterversorgten Zustand gebracht wird, wobei der Plastifizierungszylinder (210) mit einer Einbringungsöffnung (202) versehen ist, die dazu ausgelegt ist, ein physikalisches Treibmittel in die Unterversorgungszone (23) einzubringen;
einen Einbringungsgeschwindigkeitsanpassungsbehälter (300), der mit der Einbringungsöffnung (202) verbunden ist; und
einen Zufuhrmechanismus für physikalische Treibmittel, der mit dem Einbringungsgeschwindigkeitsanpassungsbehälter (300) verbunden ist, wobei der Zufuhrmechanismus für physikalische Trennmittel dazu ausgelegt ist, das physikalische Treibmittel über den Einbringungsgeschwindigkeitsanpassungsbehälter (300) zum Plastifizierungszylinder (210) zuzuführen,
wobei ein Einbringungsfilter für physikalische Treibmittel (101) nach Anspruch 1 oder 2 in der Einbringungsöffnung (202) bereitgestellt ist,
wobei ein das physikalische Treibmittel enthaltendes Druckfluid mit einem festgelegten Druck zum Einbringungsgeschwindigkeitsanpassungsbehälter (300) zugeführt wird und das Druckfluid mit dem festgelegten Druck vom Einbringungsgeschwindigkeitsanpassungsbehälter (300) in die Unterversorgungszone (23) zugeführt wird, um die Unterversorgungszone auf dem festgelegten Druck (23) zu halten,
wobei, während die Unterversorgungszone (23) auf dem festgelegten Druck gehalten wird, das geschmolzene Harz im unterversorgten Zustand in der Unterversorgungszone (23) in Kontakt mit dem das physikalische Treibmittel enthaltenden Druckfluid mit dem festgelegten Druck gebracht wird und
wobei das mit dem das physikalische Treibmittel enthaltenden Druckfluid in Kontakt gebrachte geschmolzene Harz zu einem geschäumten Formprodukt geformt wird.

4. Vorrichtung zur Herstellung eines geschäumten Formprodukts nach Anspruch 3,
wobei der Einbringungsgeschwindigkeitsanpassungsbehälter (300) mit einem Einbringungsöffnung-Öffnungs- und Schließmechanismus (250) versehen ist, der in der Lage ist, die Einbringungsöffnung (300) zu öffnen und zu schließen.

5. Verfahren zur Herstellung eines geschäumten Formprodukts durch die Verwendung einer Herstellungsvorrichtung, das Folgendes umfasst:
einen Plastifizierungszylinder (210) mit einer Plastifizierungszone (21), in der thermoplastisches Harz plastifiziert und zu einem geschmolzenen Harz geschmolzen wird, und einer Unterversorgungszone (23), in der das geschmolzene Harz in einen unterversorgten Zustand gebracht wird, wobei der Plastifizierungszylinder mit einer Einbringungsöffnung (202) versehen ist, die dazu ausgelegt ist, ein physikalisches Treibmittel in die Unterversorgungszone (23) einzubringen;
einen Einbringungsgeschwindigkeitsanpassungsbehälter (300), der mit der Einbringungsöffnung (202) verbunden ist; und
einen Einbringungsfilter für physikalische Treibmittel (101) nach Anspruch 1 oder 2,
der in der Einbringungsöffnung (202) bereitgestellt ist,
wobei das Verfahren Folgendes umfasst:
Plastifizieren und Schmelzen des thermoplastischen Harzes in der Plastifizierungszone (21), um ein geschmolzenes Harz zu bilden;
Zuführen eines das physikalische Treibmittel enthaltenden Druckfluids mit einem festgelegten Druck zum Einbringungsgeschwindigkeitsanpassungsbehälter (300) und Einbringen des Druckfluids mit dem festgelegten Druck vom Einbringungsgeschwindigkeitsanpassungsbehälter (300) in die Unterversorgungszone (23), um die Unterversorgungszone auf dem festgelegten Druck (23) zu halten,
Bringen des geschmolzenen Harzes in den unterversorgten Zustand in der Unterversorgungszone (23);
während die Unterversorgungszone (23) auf dem festgelegten Druck gehalten wird, In-Kontakt-Bringen des geschmolzenen Harzes im unterversorgten Zustand mit dem Druckfluid in der Unterversorgungszone (23); und
Formen des mit dem das physikalische Treibmittel enthaltenden Druckfluid in Kontakt gebrachten geschmolzenen Harzes zu einem geschäumten Formprodukt.

6. Verfahren zur Herstellung eines geschäumten Formprodukts nach Anspruch 5,
wobei der Einbringungsgeschwindigkeitsanpassungsbehälter (300) mit einem Einbringungsöffnung-Öffnungs- und Schließmechanismus (250) versehen ist, der in der Lage ist, die Einbringungsöffnung (202) zu öffnen und zu schließen,
wobei die Einbringungsöffnung (202) vom Einbringungsöffnung-Öffnungs- und Schließmechanismus (250) geöffnet wird, wenn das Formen zum geschäumten Formprodukt durchgeführt wird, und
wobei die Einbringungsöffnung (202) vom Einbringungsöffnung-Öffnungs- und Schließmechanismus (250) geschlossen wird, wenn der Plastifizierungszylinder (210) entgast wird, nachdem das Formen zum geschäumten Formprodukt abgeschlossen ist.

## Revendications

1. Filtre d'introduction d'agent moussant physique (101) utilisé lorsqu'un agent moussant physique est introduit dans une résine fondue dans un état de sous-remplissage, le filtre comprenant :
un corps de filtre (102) ; et
une pluralité de petits trous (103) prévus dans le corps de filtre (102) pour passer à travers le corps de filtre (102) dans une direction d'épaisseur du corps de filtre (102),
dans lequel chacun des petits trous (103) inclut :
un trou côté contact de résine (103a) qui s'ouvre vers un côté de surface du corps de filtre (102), et qui est adapté pour être en contact avec la résine fondue ; et
un trou d'introduction d'agent moussant physique (103b) qui s'ouvre vers un autre côté de surface du corps de filtre (102), et qui communique avec le trou côté contact de résine (103a), pour permettre à l'agent moussant physique d'être introduit dans le trou d'introduction d'agent moussant physique (103b),
dans lequel le trou côté contact de résine (103a) présente un diamètre qui est égal ou inférieur à un diamètre du trou d'introduction d'agent moussant physique (103b), et qui est de 10 à 80 µm, et
**caractérisé en ce que**
la pluralité de petits trous (103) sont prévus à des intervalles prédéterminés longitudinalement et latéralement, et chacune d'une épaisseur d'une paroi de séparation entre les trous d'introduction d'agent moussant physique (103b) longitudinalement adjacents les uns aux autres et d'une épaisseur d'une paroi de séparation entre les trous d'introduction d'agent moussant physique (103b) latéralement adjacents les uns aux autres est de 0,01 à 1,0 mm.

2. Filtre d'introduction d'agent moussant physique (101) selon la revendication 1,
dans lequel le diamètre du pôle d'introduction d'agent moussant physique (103b) est de 20 à 400 µm.

3. Appareil pour produire un produit moulé en mousse, l'appareil comprenant :
un cylindre de plastification (210) présentant une zone de plastification (21) dans laquelle la résine thermoplastique est plastifiée et fondue pour devenir une résine fondue, et une zone de sous-remplissage (23) dans laquelle la résine fondue est amenée dans un état de sous-remplissage, le cylindre de plastification (210) étant pourvu d'un orifice d'introduction (202) configuré pour introduire un agent moussant physique dans la zone de sous-remplissage (23) ;
un récipient d'ajustement de vitesse d'introduction (300) relié à l'orifice d'introduction (202) ; et
un mécanisme d'alimentation en agent moussant physique connecté au récipient d'ajustement de vitesse d'introduction (300), le mécanisme d'alimentation en agent moussant physique étant configuré pour fournir l'agent moussant physique au cylindre de plastification (210) via le récipient d'ajustement de vitesse d'introduction (300),
dans lequel le filtre d'introduction d'agent moussant physique (101) selon la revendication 1 ou 2 est prévu dans l'orifice d'introduction (202),
dans lequel un fluide sous pression comprenant l'agent moussant physique à une pression fixe est fourni au récipient d'ajustement de vitesse d'introduction (300), et le fluide sous pression à la pression fixe est introduit à partir du récipient d'ajustement de vitesse d'introduction (300) jusque dans la zone de sous-remplissage (23), pour maintenir la zone de sous-remplissage à la pression fixe (23),
dans lequel tandis que la zone de sous-remplissage (23) est maintenue à la pression fixe, la résine fondue dans un état de sous-remplissage est mise en contact avec le fluide sous pression, incluant l'agent moussant physique à la pression fixe, dans la zone de sous-remplissage (23), et
dans lequel la résine fondue amenée en contact avec le fluide sous pression incluant l'agent moussant physique est moulée en un produit moulé en mousse.

4. Appareil de production d'un produit moulé en mousse selon la revendication 3,
dans lequel le récipient d'ajustement de vitesse d'introduction (300) est pourvu d'un mécanisme d'ouverture et de fermeture d'orifice d'introduction (250) capable d'ouvrir et de fermer l'orifice d'introduction (300).

5. Procédé de production d'un produit moulé en mousse, en utilisant un appareil de production, incluant :
un cylindre de plastification (210) présentant une zone de plastification (21) dans laquelle la résine thermoplastique est plastifiée et fondue pour devenir une résine fondue, et une zone de sous-remplissage (23) dans laquelle la résine fondue est amenée dans un état de sous-remplissage, le cylindre de plastification étant pourvu d'un orifice d'introduction (202) configuré pour introduire un agent moussant physique dans la zone de sous-remplissage ;
un récipient d'ajustement de vitesse d'introduction (300) relié à l'orifice d'introduction (202) ; et
le filtre d'introduction d'agent moussant physique (101) selon la revendication 1 ou 2 prévu dans l'orifice d'introduction (202),
le procédé comprenant les étapes consistant à :
plastifier et faire fondre la résine thermoplastique pour former la résine fondue, dans la zone de plastification (21) ;
fournir un fluide sous pression incluant l'agent moussant physique à une pression fixe au récipient d'ajustement de vitesse d'introduction (300), et introduire le fluide sous pression à la pression fixe à partir du récipient d'ajustement de vitesse d'introduction (300) jusque dans la zone de sous-remplissage (23), pour maintenir la zone de sous-remplissage (23) à la pression fixe ;
amener la résine fondue dans l'état de sous-remplissage, dans la zone de sous-remplissage (23) ;
amener, tout en maintenant la zone de sous-remplissage (23) à la pression fixe, la résine fondue dans l'état de sous-remplissage en contact avec le fluide sous pression, dans la zone de sous-remplissage (23) ; et
mouler la résine fondue amenée en contact avec le fluide sous pression incluant l'agent moussant physique en un produit moulé en mousse.

6. Procédé de production d'un produit moulé en mousse selon la revendication 5,
dans lequel le récipient d'ajustement de vitesse d'introduction (300) est pourvu d'un mécanisme d'ouverture et de fermeture d'orifice d'introduction (250) capable d'ouvrir et de fermer l'orifice d'introduction (202),
dans lequel l'orifice d'introduction (202) est ouvert par le mécanisme d'ouverture et de fermeture d'orifice d'introduction (250), lorsque le moulage en le produit moulé en mousse est effectué, et
dans lequel l'orifice d'introduction (202) est fermé par le mécanisme d'ouverture et de fermeture d'orifice d'introduction (250), lorsque le cylindre de plastification (210) est dégazé après que le moulage en le produit moulé en mousse soit achevé.
